# NEUE EUROPÄISCHE PATENTSCHRIFT

(11) **EP 2 679 524 B2**
(45) Veröffentlichungstag und Bekanntmachung des Hinweises auf die Entscheidung über den Einspruch: **11.11.2020**
(45) Hinweis auf die Patenterteilung: 20.01.2016
(21) Anmeldenummer: 13171845.4
(22) Anmeldetag: 13.06.2013
(51) Int. Cl.: B65G 47/64, B65G 47/71

(54) **Vorrichtung und Verfahren zum Verteilen eines Stroms von Produkten**
Device and method for distributing a stream of products
Dispositif et procédé pour répartir un flux de produits

(30) Priorität: 29.06.2012 DE 102012211240
(43) Veröffentlichungstag der Anmeldung: 01.01.2014
(73) Patentinhaber: Weber Maschinenbau GmbH Breidenbach, 35236 Breidenbach (DE)
(72) Erfinder: Bauer, Sigfrid, 17091 Groß Teetzleben (DE)
(74) Vertreter: Manitz Finsterwald Patent- und Rechtsanwaltspartnerschaft mbB

(56) Entgegenhaltungen:
- DE-A1-102007 017 035
- DE-T2- 68 907 213
- US-B2- 7 404 478

## Beschreibung

Die vorliegende Erfindung betrifft eine Vorrichtung zum Verteilen eines Stroms von Produkten, insbesondere Lebensmittelprodukten, nach dem Oberbegriff des Anspruchs 1.

Mit modernen Hochleistungs-Slicern ist es möglich, von einem Produktriegel oder Produktlaib, z.B. einem Wurst- oder Käselaib, mit hoher Schnittgeschwindigkeit einzelne Produktscheiben abzutrennen. Ebenso können abgetrennte Produktscheiben sowie aus mehreren z.B. gestapelten oder geschindelten Produktscheiben bestehende Produktportionen mittels Fördereinrichtungen wie Band- oder Riemenförderern relativ schnell von dem Slicer abtransportiert und beispielsweise einer Verpackungsmaschine zugeführt werden. Hierbei ist es häufig wünschenswert, die Produkte eines ankommenden Produktstroms so zu verteilen, dass der abgehende Produktstrom eine andere Gruppierung - auch als Formatsatz bezeichnet - aufweist. Beispielsweise kann der ankommende Produktstrom einzelne hintereinander angeordnete Produkte oder Produktportionen umfassen, während der abgehende Produktstrom Gruppen von zwei, drei, vier oder mehr nebeneinander angeordneten Produkten oder Produktportionen - im Folgenden einfach: Produkte - aufweist. Zur Bewerkstelligung einer solchen Produktverteilung kann ein quer zu der Förderrichtung verfahrbarer Verteilerförderer zwischen einem Eingangsförderer und einem Ausgangsförderer angeordnet sein. Ein derartiges System ist in der DE 101 43 506 A1 offenbart. Vorrichtungen zum Verteilen geförderter Produktströme sind weiterhin auch in der DE 196 17 187 A1 und in der DE 619 395 offenbart.

In der Lebensmittelindustrie werden die Hersteller/Verarbeiter von Lebensmittelprodukten zunehmend anspruchsvoller und wünschen sich eine Vielzahl von unterschiedlichen Verteilungsvarianten. Insbesondere ist es gewünscht, mit relativ geringem Aufwand von einer Verteilungsvariante auf eine andere Verteilungsvariante zu wechseln. Die Flexibilität bestehender Systeme wird in dieser Hinsicht häufig als zu gering angesehen. Ein weiteres Problem ist das unerwünschte Verdrehen von Produkten oder Produktportionen, wenn diese schräg zur Förderrichtung transportiert werden.

Die DE 10 1007 017 035 A1 offenbart eine Vorrichtung zum Verteilen eines Stroms von Produkten nach dem Oberbegriff des Anspruchs 1, mittels welcher die von einem Slicer mehrspurig angelieferten Produkte auf einem einspurigen Förderabschnitt zusammenführbar sind. Die Produkte werden vierspurig herangefördert und zunächst auf einen quer zur Förderrichtung verschiebbaren Zwischenförderer transportiert. Von diesem Zwischenförderer aus gelangen die Produkte auf eine ebenfalls quer zur Förderrichtung verschiebbare Anordnung aus parallelen Einzelförderern, von welcher aus sie auf den einspurigen Ausgangsförderabschnitt transportiert werden.

In der DE 689 07 213 T2 ist eine Förderanlage offenbart, welche zum Vervielfachen eines eingehenden Produktstroms dient. Dazu werden ein oder zwei quer zur Förderrichtung verschiebbare Überführungsförderer eingesetzt.

Die US 7,404,478 B2 offenbart eine Vorrichtung zum Verteilen eines Produktstroms, welche auf zwei quer zur Förderrichtung verschiebbaren und in zwei Teile geteilten Verteilerförderern beruht.

Eine Vorrichtung zum Verteilen eines Stroms von Produkten kann einen Eingangsförderer und einen Ausgangsförderer umfassen, welche dazu ausgebildet sind, die Produkte entlang einer Förderrichtung zu fördern und welche in Förderrichtung gesehen hintereinander angeordnet sind, und wenigstens zwei, insbesondere höchstens drei, Verteilerförderer, welche in Förderrichtung gesehen hintereinander zwischen dem Eingangsförderer und dem Ausgangsförderer angeordnet sind und welche jeweils dazu ausgebildet sind, die Produkte entlang der Förderrichtung zu fördern. Die Verteilerförderer können unabhängig voneinander quer zu der Förderrichtung verschiebbar sein.

Dadurch, dass die Produkte während des Verteilvorgangs lediglich entlang der Förderrichtung oder quer zu der Förderrichtung, aber nicht schräg zu der Förderrichtung transportiert werden, tritt kein unerwünschtes Verdrehen der Produkte auf. Es wurde festgestellt, dass mit einer relativ geringen Anzahl von zum Beispiel zwei oder drei quer zur Förderrichtung verfahrbaren Verteilerförderern eine Vielzahl von unterschiedlichen Verteilungsvarianten bereitgestellt werden kann. Somit ist insbesondere kein oder nur ein geringer Umbauaufwand bei einem gewünschten Wechsel der Verteilungsvariante erforderlich. Weiterhin kann die Gesamtfördereinrich-tung mit einer relativ hohen Leistung betrieben werden, da der Abtransport zeilenweise und nicht formatsatzweise erfolgt. Das heißt pro Zeiteinheit wird eine einzelne Gruppe aus nebeneinander befindlichen Produkten oder Produktportionen abtransportiert.

Weiterhin kann wenigstens einer der Verteilerförderer in wenigstens zwei, insbesondere genau zwei, bezüglich der Förderrichtung nebeneinanderliegende Teile geteilt sein, wobei die Teile unabhängig voneinander antreibbar sind. Hierdurch kann eine ankommende Produktzeile aus mehreren nebeneinander befindlichen Produkten geteilt werden, indem zum Beispiel ein Teil der Produktzeile auf dem linken Teil des betreffenden Verteilerförderers "geparkt" wird, während die übrigen Produkte der Produktzeile auf dem rechten Teil des Verteilerförderers weitergefördert werden. Ebenso ist es z.B. möglich, auf einem Fördererteil nachfolgende Produkte entgegenzunehmen, ohne auf dem anderen Fördererteil befindliche Produkte weiterzufördern. Hierdurch ist es insbesondere möglich, einen ankommenden Produktstrom so zu verteilen, dass die Produkte einer Produktzeile von einer geradzahligen Anzahl auf eine ungeradzahlige Anzahl oder umgekehrt verteilt werden.

Es ist eine Aufgabe der Erfindung, beim Verteilen eines Stroms von Produkten ohne aufwändige Zusatztechnologien eine höhere Leistung und eine höhere Flexibilität zu ermöglichen.

Die Lösung der Aufgabe erfolgt durch eine Vorrichtung mit den Merkmalen des Anspruchs 1.

Bei einer erfindungsgemäßen Vorrichtung ist ausschließlich der in Förderrichtung gesehen vorderste Verteilerförderer in wenigstens zwei, insbesondere genau zwei, bezüglich der Förderrichtung nebeneinanderliegende und unabhängig voneinander antreibbare Teile geteilt. Dies hat sich hinsichtlich der erzielbaren Verteilungsoptionen als besonders günstig erwiesen.

Erfindungsgemäß weist jeder der beiden Teile des geteilten Verteilerförderers mehrere nebeneinander befindliche Förderspuren zum parallelen Fördern von Produkten auf, wobei die Anzahl der Förderspuren genau die Hälfte der maximalen Anzahl von Förderspuren des Eingangsförderers und/oder des Ausgangsförderers beträgt. Das heißt jeder Teil des Verteilerförderers kann nicht nur ein einzelnes Produkt, sondern eine Gruppe aus mehreren nebeneinander befindlichen Produkten aufnehmen.

Somit kann die Anzahl an möglichen Verteilungsmustern weiter erhöht werden. Die Verteilung der nebeneinander auf dem Eingangsförderer ankommenden Produkte auf die beiden Teile des geteilten Verteilerförderers kann auch unsymmetrisch sein. Das heißt es kann beispielsweise bei einem vierspurigen Eingangsförderer ein Teil des Verteilerförderers eine Gruppe aus drei nebeneinander befindlichen Produkten aufnehmen. Prinzipiell ist es auch möglich, dass bei einer bestimmten Verteilungsvariante ein Teil des Verteilerförderers alle Förderspuren des Eingangsförderers bedient.

Erfindungsgemäß ist ferner wenigstens einer, insbesondere jeder, der Verteilerförderer ausgehend von einer Mittelstellung um höchstens eine Förderspur quer zu der Förderrichtung verschiebbar.

Weiterbildungen der Erfindung sind in den abhängigen Ansprüchen, der Beschreibung sowie der beigefügten Zeichnung angegeben.

Vorzugsweise ist wenigstens einer, insbesondere jeder, der Verteilerförderer ausschließlich in Förderrichtung antreibbar. Mit anderen Worten ist es bevorzugt, dass die Verteilerförderer während des Verteilvorganges nicht entgegen der Förderrichtung, also rückwärts betrieben werden. Dies ist auch in dem Sinne gemeint, dass eine Steuereinrichtung der Verteilervorrichtung dafür sorgt, dass die Verteilerförderer lediglich in Vorwärtsrichtung betrieben werden, auch wenn diese von den mechanischen Gegebenheiten her grundsätzlich rückwärts fördern könnten.

Gemäß einer Ausgestaltung der Erfindung ist wenigstens ein, insbesondere genau ein, weiterer Verteilerförderer zwischen dem Eingangsförderer und dem Ausgangsförderer angeordnet, welcher unabhängig von den übrigen Verteilerförderern quer zu der Förderrichtung verschiebbar ist. Die Flexibilität der Verteilervorrichtung kann hierdurch weiter erhöht werden. Insbesondere können im Vergleich zu einer Ausgestaltung mit lediglich zwei Verteilerförderern zusätzliche Verteilungsvarianten bereitgestellt werden, beispielsweise eine Verteilung eines ankommenden Stroms aus jeweils drei nebeneinander angeordneten Produkten auf einen abgehenden Strom aus jeweils vier nebeneinander angeordneten Produkten.

Vorzugsweise weisen die vorhandenen Verteilerförderer jeweils mehrere nebeneinander befindliche Förderspuren zum parallelen Fördern von Gruppen von Produkten oder Produktportionen auf, wobei insbesondere die Anzahl der Förderspuren gleich der maximalen Anzahl von Förderspuren des Eingangsförderers und/oder des Ausgangsförderers ist.

Vorzugsweise ist die Verschiebbarkeit um höchstens eine Förderspur quer zu der Förderrichtung ausgehend von einer Mittelstellung in beiden Richtungen gegeben, sodass also der betreffende Verteilerförderer z.B. ausgehend von einer maximal nach links verschobenen Stellung in eine maximal nach rechts verschobene Stellung um zwei Förderspuren verschoben wird. Dies ermöglicht insbesondere einen kompakten Aufbau der Gesamtanlage.

Ferner können die Verteilerförderer jeweils eine auf die Förderrichtung bezogene Länge aufweisen, die gerade zur Aufnahme eines Produkts eines Stroms von nacheinander geförderten Produkten ausreicht. Hierdurch kann insbesondere der Platzbedarf der Vorrichtung in Förderrichtung gesehen gering gehalten werden.

Vorzugsweise sind die Verteilerförderer jeweils als Band- oder Riemenförderer ausgebildet. Dies hat sich insbesondere unter hygienischen Gesichtspunkten als günstig erwiesen. Prinzipiell könnten jedoch auch Rollenförderer oder dergleichen vorgesehen sein.

Weiterhin ist es möglich, dass der Eingangsförderer, der Ausgangsförderer und die Verteilerförderer die gleiche Förderbreite aufweisen. Dadurch ergibt sich ein kompakter Aufbau der Gesamtanlage. Eine davon abweichende, erfindungsgemäß ebenfalls mögliche Anordnung, bei welcher die Verteilerförderer breiter oder schmaler sind als der Eingangsförderer, bietet demgegenüber Vorteile insbesondere hinsichtlich der Flexibilität.

Vorzugsweise sind der Eingangsförderer, die Verteilerförderer und der Ausgangsförderer ohne gegenseitige Überlappung aufeinanderfolgend entlang der Förderrichtung angeordnet. Eine solche überlappungsfreie Anordnung ermöglicht insbesondere einen einfachen Austausch der Verteilerförderer. Beispielsweise kann die Anordnung aus Verteilerförderern modulartig aufgebaut sein, sodass sie leicht als Ganzes gegen ein anderes Modul austauschbar ist. Dies ist für einen Betreiber einer Lebensmittelverarbeitungsanlage vor allem deshalb vorteilhaft, da zum Beispiel durch einen Modulaustausch eine einfache Erweiterung der Anlage auf eine größere Anzahl an bereitstellbaren Verteilungsmustern möglich ist.

Der Eingangsförderer und/oder der Ausgangsförderer können zum zeilenweisen Fördern der Produkte in Förderrichtung ausgebildet sein. Das heißt pro Zeiteinheit wird durch den Eingangsförderer bzw. den Ausgangsförderer stets eine Gruppe von bezüglich der Förderrichtung nebeneinan-derliegenden, nicht jedoch von hintereinanderliegenden Produkten gefördert.

Insbesondere sind zumindest zwei und bevorzugt alle Verteilerförderer baugleich oder identisch ausgeführt. Ein derartiger Modulaufbau ist besonderes kostengünstig und ermöglicht ein einfaches und schnelles Umbauen oder Umkonfigurieren der Vorrichtung.

Die Verteilerförderer können jeweils Riemen- oder Bandförderer umfassen bzw. als Riemen- oder Bandförderer ausgebildet sein. Dies ist jedoch nicht zwingend. Zumindest ein Teil der Verteilerförderer kann z.B. jeweils einen so genannten Plattenverteiler umfassen bzw. als Plattenverteiler ausgebildet sein. Insbesondere können anstelle von Riemen einzelne Plättchen oder Platten bzw. flächige Förderelemente insbesondere mit einer Querausrichtung vorgesehen sein, die insbesondere nach Art einer Planierraupe bewegt werden können. Die konkrete Ausgestaltung der Verteilerförderer steht im Rahmen der Erfindung somit im Belieben des Fachmannes. Grundsätzlich ist jeder Verteilerförderer denkbar, der in der Lage ist, sowohl zumindest einen Teil einer Produktzeile in Querrichtung zu versetzen als auch zumindest einen Teil einer Produktzeile in Förderrichtung zu fördern.

Generell ist bevorzugt für jede Vorrichtung der hier vorstehend und nachstehend beschriebenen und beanspruchten Art eine Steuerung oder ein Steuerprogramm vorgesehen, die bzw. das die Vorrichtung in der jeweils angegeben Art und Weise steuert, wobei nicht ausgeschlossen ist, dass die so gesteuerte Vorrichtung in konstruktiver Hinsicht derart ausgebildet ist, dass sie auch auf andere Art und Weise betrieben werden kann.

Die Erfindung wird im Folgenden beispielhaft unter Bezugnahme auf die Zeichnungen beschrieben.
- Fig. 1a bis 1g: zeigen eine Vorrichtung zum Verteilen eines Stroms von Produkten gemäß einer ersten Ausführungsform der Erfindung, welche einen Strom von aus einem Produkt bestehenden Produktzeilen in einen Strom von aus zwei Produkten bestehenden Produktzeilen wandelt.
- Fig. 2a bis 2h: zeigen eine nicht zur Erfindung gehörende Vorrichtung zum Verteilen eines Stroms von Produkten, welche einen Strom von aus einem Produkt bestehenden Produktzeilen in einen Strom von aus drei Produkten bestehenden Produktzeilen wandelt.
- Fig. 3a bis 3h: zeigen die Vorrichtung gemäß Fig. 2a bis 2h beim Wandeln eines Stroms von aus einem Produkt bestehenden Produktzeilen in einen Strom von aus vier Produkten bestehenden Produktzeilen.
- Fig. 4a bis 4h: zeigen die Vorrichtung gemäß Fig. 2a bis 2h beim Wandeln eines Stroms von aus zwei Produkten bestehenden Produktzeilen in einen Strom von aus drei Produkten bestehenden Produktzeilen.
- Fig. 5a bis 5g: zeigen die Vorrichtung gemäß Fig. 1a bis 1g beim Wandeln eines Stroms von aus zwei Produkten bestehenden Produktzeilen in einen Strom von aus vier Produkten bestehenden Produktzeilen.
- Fig. 6a bis 6j: zeigen eine nicht zur Erfindung gehörende Vorrichtung zum Verteilen eines Stroms von Produkten, welche einen Strom von aus drei Produkten bestehenden Produktzeilen in einen Strom von aus vier Produkten bestehenden Produktzeilen wandelt.
- Fig. 7a bis 7g: zeigen die Vorrichtung gemäß Fig. 1a bis 1g beim Wandeln eines Stroms von aus drei Produkten bestehenden Produktzeilen in einen Strom von aus sechs Produkten bestehenden Produktzeilen.
- Fig. 8a bis 8h: zeigen die Vorrichtung gemäß Fig. 2a bis 2h beim Wandeln eines Stroms von aus zwei Produkten bestehenden Produktzeilen in einen Strom von aus sechs Produkten bestehenden Produktzeilen.
- Fig. 9a bis 9h: zeigen die Vorrichtung gemäß Fig. 8a bis 8h beim Wandeln eines Stroms von aus drei Produkten bestehenden Produktzeilen in einen Strom von aus fünf Produkten bestehenden Produktzeilen.
- Fig. 10a bis 10g: zeigen die Vorrichtung gemäß Fig. 8a bis 8h beim Wandeln eines Stroms von aus vier Produkten bestehenden Produktzeilen in einen Strom von aus sechs Produkten bestehenden Produktzeilen.
- Fig. 11a bis 11h und Fig. 12a bis 12f: zeigen die Vorrichtung gemäß Fig. 6a bis 6j beim Wandeln eines Stroms von aus zwei Produkten bestehenden Produktzeilen in einen Strom von aus fünf Produkten bestehenden Produktzeilen.

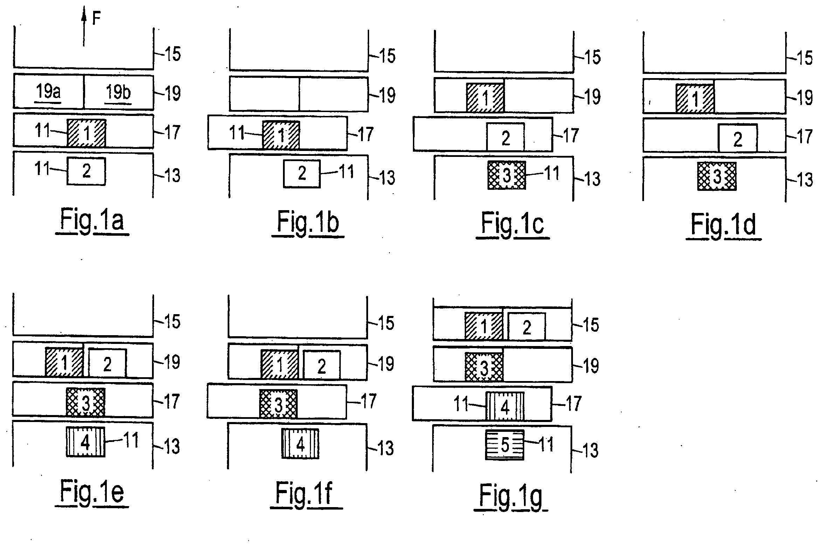

Die in Fig. 1a bis 1g gezeigte Vorrichtung dient zum Verteilen eines entlang einer Förderrichtung F zeilenweise geförderten Stroms von Lebensmittelprodukten 11, bei welchen es sich beispielsweise um Wurst- oder Käsescheiben oder um z.B. gestapelte oder geschindelte Anordnungen bzw. Portionen solcher Scheiben handeln kann. Die Produkte 11 werden zeilenweise auf einem Eingangsförderer 13 - zum Beispiel ausgehend von einem nicht dargestellten Slicer oder vorangehenden Produktförderer - entlang der Förderrichtung F bis zu einem ersten Verteilerförderer 17 gefördert. In der Förderrichtung F gesehen hinter dem ersten Verteilerförderer 17 ist ein zweiter Verteilerförderer 19 angeordnet. Der erste Verteilerförderer 17 ist in der Lage, die auf dem Eingangsförderer 13 ankommenden Produkte 11 auf den zweiten Verteilerförderer 19 zu fördern. Der zweite Verteilerförderer 19 ist in der Lage, die Produkte 11 entlang der Förderrichtung F auf einen in Förderrichtung F gesehen hinter diesem befindlichen Ausgangsförderer 15 zu fördern, auf welchem die Produkte 11 einer nachfolgenden, nicht dargestellten Produktverarbeitungsvorrichtung wie einer Verpackungsmaschine zugeführt werden. Zur Verdeutlichung des Verteilprozesses sind die Produkte 11 gemäß der Reihenfolge ihrer Ankunft am ersten Verteilerförderer 17 mit Nummern gekennzeichnet.

Die beiden Verteilerförderer 17, 19 sind unabhängig voneinander quer zu der Förderrichtung F verschiebbar. Zudem ist der in der Förderrichtung F gesehen vordere Verteilerförderer 19 in zwei bezüglich der Förderrichtung F nebeneinander liegende und unabhängig voneinander antreibbare Teile 19a, 19b geteilt. Die Querverschiebung der Verteilerförderer 17, 19 kann beispielsweise über nicht dargestellte Linearantriebe erfolgen. Mittels der beiden Verteilerförderer 17, 19 wird ein auf dem Eingangsförderer 13 ankommender zeilenweiser Strom von Produkten 11 in einen auf dem Ausgangsförderer 15 abgehenden zeilenweisen Strom von Produkten 11 verteilt, also umsortiert, wobei der abgehende Strom von Produkten 11 mehr Produkte 11 pro Zeile aufweist als der ankommende Strom von Produkten 11.

In Fig. 1a bis 1g ist eine sogenannte 1/2-Verteilung dargestellt, bei welcher die Produkte 11 in Zeilen mit einem einzigen Produkt 11 zugeführt werden und in Zeilen mit zwei nebeneinanderliegen Produkten 11 abgeführt werden. Fig. 1a zeigt einen Betriebszustand, bei welchem das erste zugeführte Produkt 11 mit der Nummer 1 von dem Eingangsförderer 13 auf den ersten Verteilerförderer 17 überführt worden ist. Bevor das nachfolgende Produkt 11 mit der Nummer 2 auf den ersten Verteilerförderer 17 überführt wird, wird dieser um etwa eine halbe Produktbreite im Bild nach links verschoben (Fig. 1b). In einem in Fig. 1c dargestellten nachfolgenden Schritt wird das Produkt 11 mit der Nummer 2 auf den ersten Verteilerförderer 17 gefördert und das Produkt 11 mit der Nummer 1 wird von dem ersten Verteilerförderer 17 auf den zweiten Verteilerförderer 19 gefördert. Der erste Verteilerförderer 17 wird dann gemäß Fig. 1d wieder zurück in seine Ausgangsposition verschoben, wodurch das Produkt 11 mit der Nummer 2 um etwa eine halbe Produktbreite nach rechts verschoben wird. Somit befindet sich das Produkt 11 mit der Nummer 2 um etwa eine Produktbreite weiter rechts als das Produkt 11 mit der Nummer 1 und kann neben dieses auf den zweiten Verteilerförderer 19 gefördert werden. Gleichzeitig wird das nächste Produkt 11 mit der Nummer 3 von dem Eingangsförderer 13 auf den in der Ausgangsposition befindlichen ersten Verteilerförderer 17 gefördert (Fig. 1e). Die beiden nebeneinander befindlichen Produkte 11 mit den Nummern 1 und 2 werden auf den Ausgangsförderer 15 gefördert und gehen als neue Produktzeile ab. Gleichzeitig werden die Produkte 11 mit den Nummern 3 und 4 wie vorstehend beschrieben auf dem zweiten Verteilerförderer 19 nebeneinander platziert. Im Ergebnis wird somit die Anzahl der Produkte 11 pro Produktzeile von eins auf zwei verdoppelt.

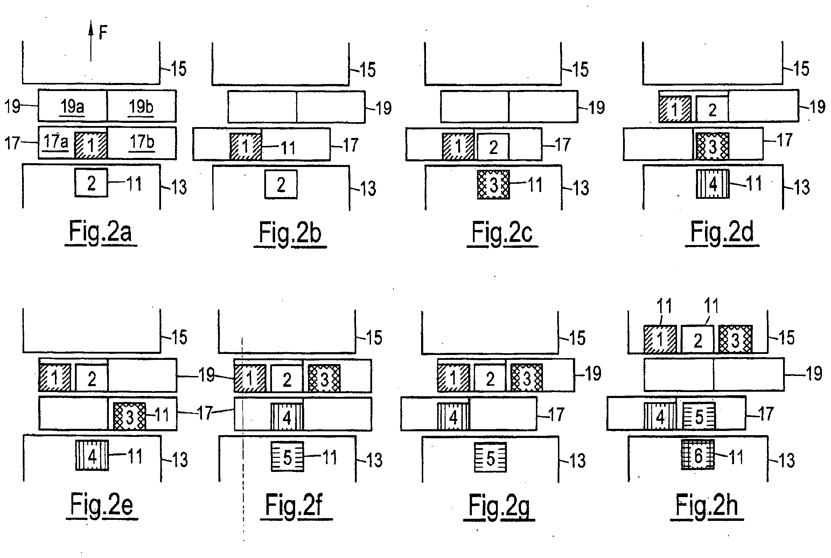

Die Fig. 2a bis 2h zeigen eine ähnliche Vorrichtung wie die vorstehend beschriebene, wobei jedoch beide Verteilerförderer 17, 19 in zwei bezüglich der Förderrichtung F nebeneinanderliegende und jeweils unabhängig voneinander antreibbare Teile 17a, 17b, 19a, 19b geteilt sind. Als Ablauf dargestellt ist eine 1/3-Verteilung, bei welcher die Produkte 11 in Zeilen mit einem einzigen Produkt 11 zugeführt werden und in Zeilen mit drei nebeneinanderliegen Produkten 11 abgeführt werden. Dadurch, dass auch der in Förderrichtung F gesehen hintere Verteilerförderer 17 in zwei unabhängig voneinander antreibbare Teile 17a, 17b geteilt ist, können die Produkte 11 mit den Nummern 1 und 2 bereits auf diesem ersten Verteilerförderer 17 nebeneinander platziert und anschließend auf den im Bild linken Teil 19a des zweiten Verteilerförderers 19 gefördert werden. Das nächste Produkt 11 mit der Nummer 3 wird dann nach einer entsprechenden Querverschiebung des ersten Verteilerförderers 17 neben die beiden Produkte 11 mit den Nummern 1 und 2 auf den zweiten Verteilerförderer 19 gefördert (Fig. 2f). Die nebeneinander befindlichen Produkte 11 mit den Nummern 1, 2 und 3 können somit als abgehende Produktzeile auf den Ausgangsförderer 15 gefördert werden, während die nächsten Produkte 11 mit den Nummern 4, 5 und 6 wie vorstehend beschrieben nebeneinander platziert werden.

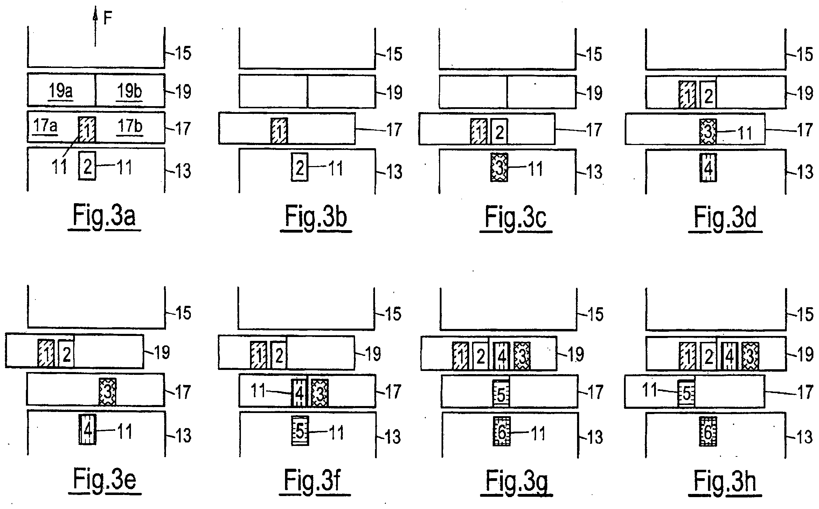

In den Fig. 3a bis 3h ist die gleiche Vorrichtung gezeigt wie in den Fig. 2a bis 2h, wobei jedoch als Ablauf eine 1/4-Verteilung dargestellt ist, bei welcher die Produkte 11 in Zeilen mit einem einzigen Produkt 11 zugeführt werden und in Zeilen mit vier nebeneinanderliegen Produkten 11 abgeführt werden. Zunächst werden die Produkte 11 mit den Nummern 1 und 2 unter einer Linksverschiebung des ersten Verteilerförderers 17 nebeneinander auf diesen platziert (Fig. 3a bis 3c). Anschließend wird unter einer Rückverschiebung des ersten Verteilerförderers 17 in die Ausgangsposition ein Nebeneinanderplatzieren der Produkte 11 mit den Nummern 3 und 4 durchgeführt, wobei das Produkt 11 mit der Nummer 3 rechts von dem Produkt 11 mit der Nummer 4 auf dem ersten Verteilerförderer 17 zu liegen kommt (Fig. 3d bis 3f). Der zweite Verteilerförderer 19 wird dann derart nach links verschoben, dass die nebeneinander befindlichen Produkte 11 mit den Nummern 3 und 4 neben die Produkte 11 mit den Nummern 1 und 2 auf den zweiten Verteilerförderer 19 und nachfolgend von diesem auf den Ausgangsförderer 15 gefördert werden können (Fig. 3g und 3h). Das nächste Produkt 11 mit der Nummer 5 bildet dann das erste Element einer neu zu erstellenden Produktzeile.

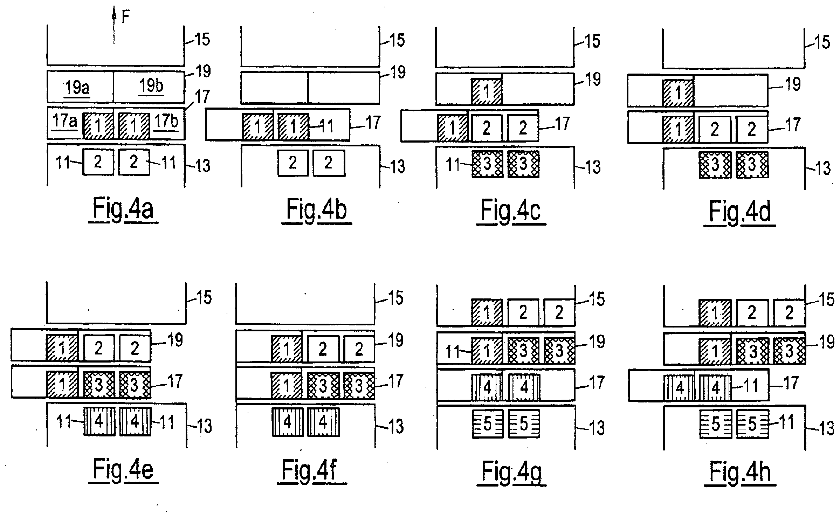

In Fig. 4a bis 4h ist wiederum die Vorrichtung gemäß Fig. 2a bis 2h gezeigt, wobei hier jedoch als Ablauf eine 2/3-Verteilung dargestellt ist, bei welcher die Produkte 11 in Zeilen mit zwei Produkten 11 zugeführt werden und in Zeilen mit drei Produkten 11 abgeführt werden. Wie aus Fig. 4a bis 4c hervorgeht, werden zunächst die Produkte 11 der ersten Produktzeile mit der Nummer 1 auf den ersten Verteilerförderer 17 gefördert. Da dieser geteilt ist, kann eines dieser Produkte 11 auf den zweiten Verteilerförderer 19 gefördert werden, während das andere Produkt 11 auf dem ersten Verteilerförderer 17 verbleibt und gleichzeitig die beiden Produkte 11 mit der Nummer 2 rechts neben dieses auf dem ersten Verteilerförderer 17 platziert werden. Anschließend wird gemäß Fig. 4d der zweite Verteilerförderer 19 in die gleiche Querstellung verfahren wie der erste Verteilerförderer 17. Es werden dann gemäß Fig. 4e die Produkte 11 mit der Nummer 2 und die Produkte 11 mit der Nummer 3 um eine Position in Förderrichtung F vorwärts gefördert, während die Produkte 11 mit der Nummer 1 auf den - stillstehenden - linken Teilen 17a, 19a der Verteilerförderer 17, 19 verbleiben. Somit kommen gemäß Fig. 4f auf beiden Verteilerförderern 17, 19 jeweils drei Produkte 11 nebeneinander zu liegen. Diese können dann nacheinander als Produktzeilen auf den Ausgangsförderer 15 gefördert werden, während mit den Produkten 11 der beiden nachfolgenden Produktzeilen mit den Nummern 4 und 5 wie vorstehend beschrieben verfahren wird.

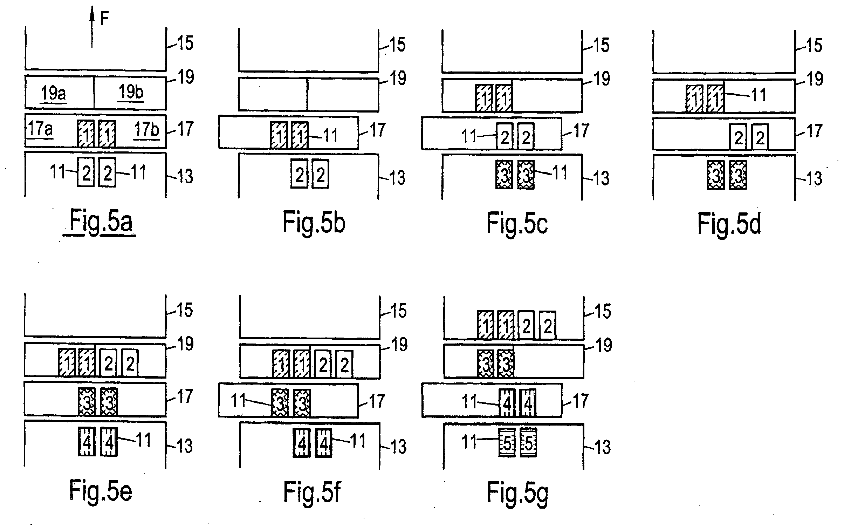

Fig. 5a bis 5g beziehen sich auf eine Vorrichtung wie in Fig. 1a bis 1g dargestellt, das heißt der erste Verteilerförderer 17 ist nicht in zwei unabhängig voneinander antreibbare Teile geteilt. Als Ablauf ist hier eine 2/4-Verteilung dargestellt, bei welcher die Produkte 11 in Zeilen mit zwei Produkten 11 zugeführt werden und in Zeilen mit drei Produkten 11 abgeführt werden. Der Ablauf ist analog zu der 1/2-Verteilung gemäß Fig. 1a bis 1g, wobei jedoch der erste Verteilerförderer 17 um etwa eine ganze Produktbreite querverschoben wird.

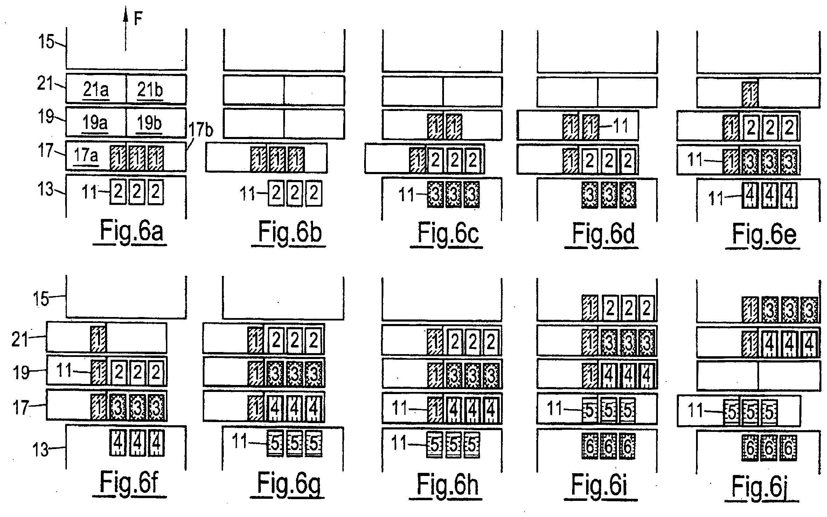

In den Fig. 6a bis 6j ist eine Vorrichtung dargestellt, bei welcher drei in Förderrichtung F gesehen hintereinander angeordnete Verteilerförderer 17, 19, 21 zwischen dem Eingangsförderer 13 und dem Ausgangsförderer 15 angeordnet sind. Alle drei Verteilerförderer 17, 19, 21 sind in zwei bezüglich der Förderrichtung F nebeneinanderliegende Teile 17a, 17b, 19a, 19b, 21a, 21b geteilt, wobei die Teile jeweils unabhängig voneinander antreibbar sind. Als Ablauf ist eine 3/4-Verteilung gezeigt, bei welcher die Produkte 11 in Zeilen mit drei Produkten 11 zugeführt werden und in Zeilen mit vier Produkten 11 abgeführt werden. Zu diesem Zweck werden die drei Produkte 11 der ersten Produktzeile mit der Nummer 1 hintereinander auf den drei Verteilerförderem 17, 19, 21 platziert, und zwar auf den im Bild linken Teilen 17a, 19a, 21a (Fig. 6a bis 6f). Diese Teile 17a, 19a, 21a werden dann angehalten, während die Produkte 11 dreier nachfolgender Produktzeilen mit den Nummern 2, 3 und 4 auf die rechten Teile 17b, 19b, 21b der Verteilerförderer 17, 19, 21 gefördert werden. Gemäß Fig. 6h befinden sich dann auf allen drei Verteilerförderern 17, 19, 21 Produktgruppen aus vier Produkten 11. Diese können als Produktzeilen nacheinander auf den Ausgangsförderer 15 gefördert werden. Mit den drei Produkten 11 der nächsten Produktzeile mit der Nummer 5 wird dann ebenso verfahren wie zuvor mit den drei Produkten 11 der ersten Produktzeile mit der Nummer 1.

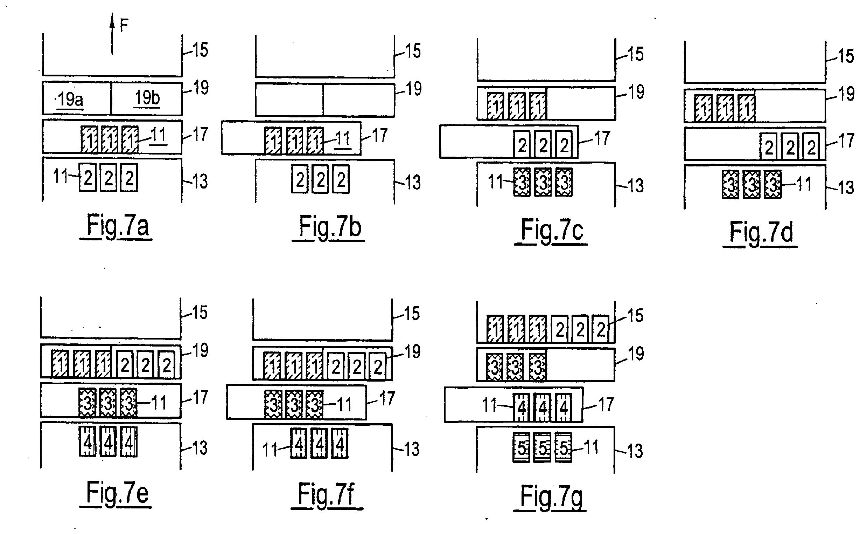

Die Fig. 7a bis 7g beziehen sich wiederum auf die in Fig. 1a bis 1g dargestellte Ausführungsform mit lediglich zwei Verteilerförderern 17, 19, von denen der in Förderrichtung F gesehen vordere Verteilerförderer 19 in zwei Teile geteilt ist. Als Ablauf ist hier eine 3/6-Verteilung dargestellt, bei welcher die Produkte 11 in Zeilen mit drei Produkten 11 zugeführt werden und in Zeilen mit sechs Produkten 11 abgeführt werden. Der Ablauf ist analog zu dem Ablauf gemäß Fig. 1a bis 1g, das heißt es werden jeweils zwei komplette, drei Produkte 11 aufweisende Produktzeilen auf dem zweiten Verteilerförderer 19 nebeneinander platziert, um so die Anzahl der Produkte 11 für die abgehende Produktzeile auf sechs zu verdoppeln.

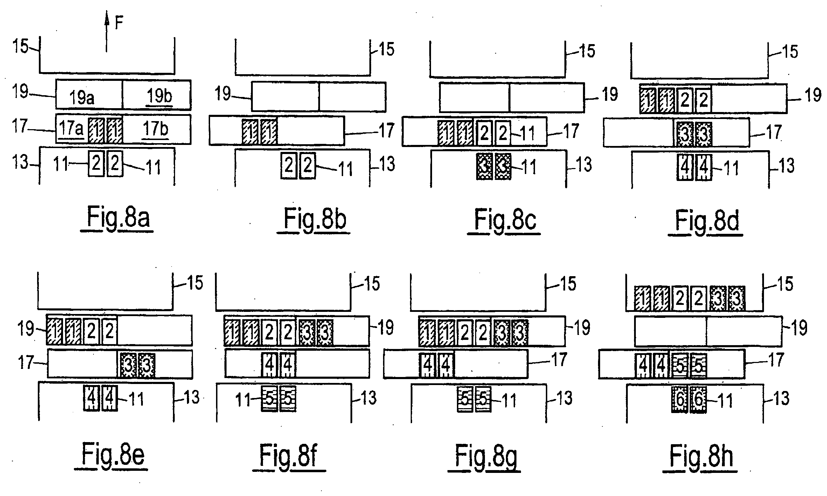

In den Fig. 8a bis 8h ist die Vorrichtung gemäß Fig. 2a bis 2h gezeigt, wobei als Ablauf eine 2/6-Verteilung dargestellt ist, bei welcher die Produkte 11 in Zeilen mit zwei Produkten 11 zugeführt werden und in Zeilen mit sechs Produkten 11 abgeführt werden. Die beiden Verteilerförderer 17, 19 sind zu diesem Zweck um etwa zwei Produktbreiten quer zu der Förderrichtung F verschiebbar. Im Übrigen ist der Ablauf analog zu dem Ablauf gemäß Fig. 2a bis 2h.

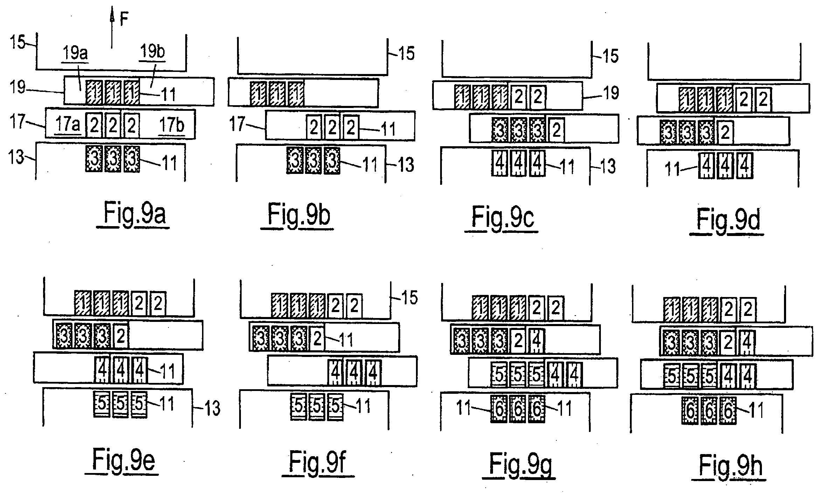

Auch die Fig. 9a bis 9h beziehen sich auf die in den Fig. 8a bis 8h dargestellte Vorrichtung, wobei hier jedoch als Ablauf eine 3/5-Verteilung dargestellt ist, bei welcher die Produkte 11 in Zeilen mit drei Produkten 11 zugeführt werden und in Zeilen mit fünf Produkten 11 abgeführt werden. Bei dieser Variante wird zunächst die erste ankommende Produktzeile mit der Nummer 1 durch zwei Produkte der nächsten Produktzeile mit der Nummer 2 ergänzt (Fig. 9a bis 9c). An das verbleibende Produkt mit der Nummer 2 wird eine weitere vollständige Produktzeile mit der Nummer 3 angefügt (Fig. 9d). Nach einer entsprechenden Querverschiebung des ersten Verteilerförderers 17 wird dann ein Produkt 11 einer wiederum nachfolgenden Produktzeile mit der Nummer 4 auf der anderen Seite neben das Produkt 11 mit der Nummer 2 gelegt, sodass sich eine Produktzeile aus Produkten 11 mit den Nummern 3, 3, 3, 2 und 4 ergibt (Fig. 9e bis 9g). Gleichzeitig wird mit der Erstellung einer weiteren Produktzeile aus Produkten 11 mit den Nummern 5 und 4 begonnen.

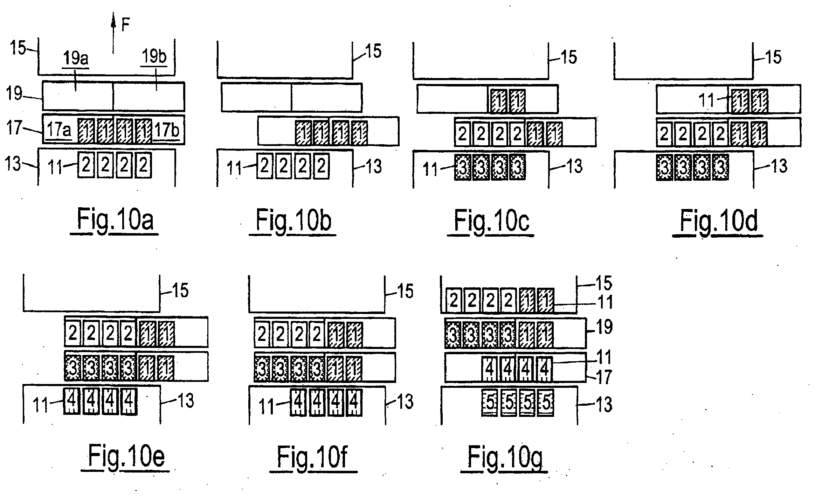

Fig. 10a bis 10g zeigen dieselbe Vorrichtung wie die Fig. 9a bis 9h, wobei hier jedoch als Ablauf eine 4/6-Verteilung dargestellt ist, bei welcher die Produkte 11 in Zeilen mit vier Produkten zugeführt werden und in Zeilen mit sechs Produkten abgeführt werden. Der Ablauf der Arbeitsschritte erfolgt analog zu den Fig. 4a bis 4h, wobei jeweils zwei nebeneinanderliegende Produkte 11 synchron behandelt werden. Hierfür sind die beiden Verteilerförderer 17, 19 um etwa zwei Produktbreiten quer zu der Förderrichtung F verschiebbar.

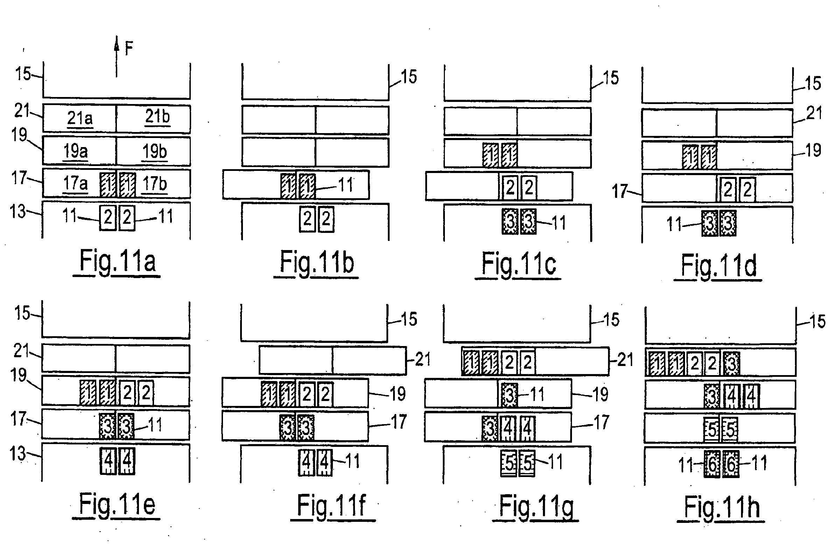

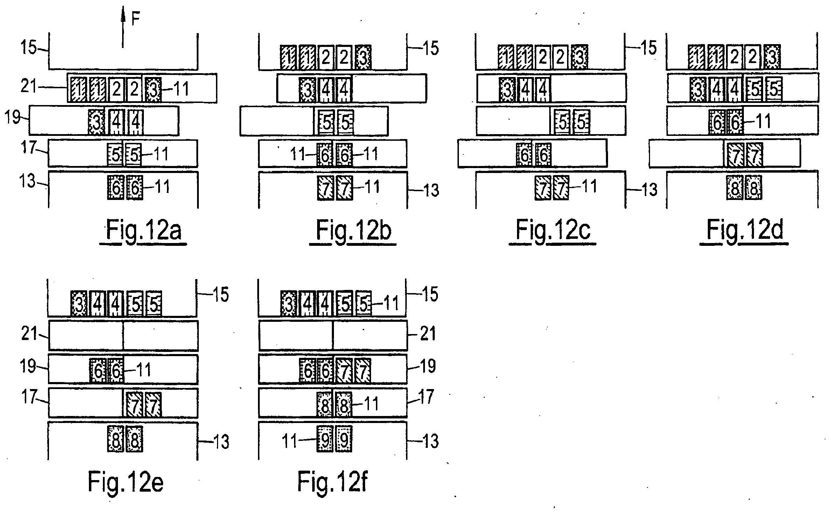

In den Fig. 11a bis 11h sowie 12a bis 12f ist wiederum die in Fig. 6a bis 6j dargestellte Vorrichtung gezeigt, welche drei geteilte Verteilerförderer 17, 19, 21 aufweist. Als Ablauf ist eine 2/5-Verteilung dargestellt, bei welcher die Produkte 11 in Zeilen mit zwei Produkten 11 zugeführt werden und in Zeilen mit fünf Produkten 11 abgeführt werden. Hierfür werden zunächst die beiden Produktzeilen mit den Nummern 1 und 2 auf dem zweiten Verteilerförderer 19 nebeneinander platziert (Fig. 11a bis 11e). Von der nachfolgenden Produktzeile mit der Nummer 3 wird ein Produkt 11 rechts an die beiden nebeneinander befindlichen Produktgruppen mit den Nummern 1 und 2 angefügt, während das andere Produkt 11 der Produktzeile mit der Nummer 3 auf dem zweiten Verteilerförderer 19 verbleibt. An dieses werden dann die beiden nachfolgenden Produktzeilen mit den Nummern 4 und 5 rechts angefügt (Fig. 11h, 12a bis 12d). Somit wird auf dem dritten Verteilerförderer 21 eine Produktzeile mit fünf Produkten 11 gebildet, welche aus Produkten 11 mit den Nummern 3, 4, 4, 5 und 5 zusammengesetzt ist. Die nachfolgenden Produktzeilen mit den Nummern 6 und 7 werden dann wiederum nebeneinander platziert und durch ein Produkt 11 einer nachfolgenden Produktzeile mit der Nummer 8 ergänzt, woraufhin sich der Ablauf wiederholt.

Aus den vorstehend beschriebenen Verteilungsabläufen ist ersichtlich, dass es erfindungsgemäß nicht vorgesehen ist, einen der Verteilerförderer 17, 19, 21 rückwärts zu betreiben. Dies kann durch eine entsprechend ausgebildete Steuerung erreicht werden, auch wenn die Verteilerförderer 17, 19, 21 in konstruktiver Hinsicht bei entsprechender Ansteuerung auch rückwärts betrieben werden könnten. Es ist also zwar möglich, aber nicht zwingend, dass die Verteilerförderer 17, 19, 21 aus rein konstruktiven Gründen zu einem Rückwärtsbetrieb nicht in der Lage ist.

Es reicht hier vielmehr aus, wenn einer der Verteilerförderer 17, 19, 21 oder ein Teil eines Verteilerförderers 17, 19, 21 vorübergehend angehalten wird, also zeitweise stillsteht. Ein Vorteil der Erfindung besteht darin, dass eine kontinuierliche zeilenweise Förderung eines Produktstroms möglich ist. Mit anderen Worten muss der Eingangsförderer 13 nie gestoppt werden, was hinsichtlich der Effizienz der Gesamtanlage besonders vorteilhaft ist. Der Takt der ankommenden Produkte 11 wird nämlich üblicherweise durch den dem Eingangsförderer 13 vorausgehenden Slicer vorgegeben und kann während des Betriebs nur mit hohem Zusatzaufwand geändert werden.

Es ist von Vorteil, wenn der Eingangsförderer 13, der Ausgangsförderer 15 sowie die Verteilerförderer 17, 19, 21 im Wesentlichen übergangslos aneinander anschließen. Jedoch ist es nicht erforderlich, überlappende Bereiche zwischen den einzelnen Förderern vorzusehen. Aufgrund dieser überlappungsfreien Anordnung ist der Umbauaufwand bei einem gewünschten Wechsel der Verteilung bedeutend verringert. Zudem kommt der modulartige Gesamtaufbau einem schnellen und einfachen Wechsel zwischen unterschiedlichen Verteilungsvarianten entgegen.

### Bezugszeichenliste

- 11: Produkt
- 13: Eingangsförderer
- 15: Ausgangsförderer
- 17: erster Verteilerförderer
- 17a, 17b: Teil des ersten Verteilerförderers
- 19: zweiter Verteilerförderer
- 19a, 19b: Teil des zweiten Verteilerförderers
- 21: dritter Verteilerförderer

- F: Förderrichtung

## Patentansprüche

1. Vorrichtung zum Verteilen eines Stroms von Produkten (11), insbesondere Lebensmittelprodukten, mit
einem Eingangsförderer (13) und einem Ausgangsförderer (15), welche dazu ausgebildet sind, die Produkte (11) entlang einer Förderrichtung (F) zu fördern und welche in Förderrichtung (F) gesehen hintereinander angeordnet sind, und
wenigstens zwei, insbesondere höchstens drei, Verteilerförderern (17, 19, 21), welche in Förderrichtung (F) gesehen hintereinander zwischen dem Eingangsförderer (13) und dem Ausgangsförderer (15) angeordnet sind und welche jeweils dazu ausgebildet sind, die Produkte (11) entlang der Förderrichtung (F) zu fördern,
wobei die Verteilerförderer (17, 19, 21) unabhängig voneinander quer zu der Förderrichtung (F) verschiebbar sind, und
wobei einer der Verteilerförderer (17, 19, 21) in genau zwei bezüglich der Förderrichtung (F) nebeneinanderliegende Teile (17a, 17b, 19a, 19b, 21a, 21b) geteilt ist, wobei die Teile unabhängig voneinander antreibbar sind, wobei
ausschließlich der in Förderrichtung (F) gesehen vorderste Verteilerförderer (19, 21) in genau zwei bezüglich der Förderrichtung (F) nebeneinanderliegende und unabhängig voneinander antreibbare Teile (19a, 19b, 21a, 21b) geteilt ist,
**dadurch gekennzeichnet, dass**
jeder der beiden Teile (19a, 19b, 21a, 21b) des geteilten Verteilerförderers (19, 21) mehrere nebeneinander befindliche Förderspuren zum parallelen Fördern von Produkten (11) aufweist, wobei die Anzahl der Förderspuren genau die Hälfte der maximalen Anzahl von Förderspuren des Eingangsförderers (13) und/oder des Ausgangsförderers (15) beträgt, und dass
wenigstens einer der Verteilerförderer (17, 19, 21) ausgehend von einer Mittelstellung um höchstens eine Förderspur quer zu der Förderrichtung verschiebbar ist.

2. Vorrichtung nach Anspruch 1,
**dadurch gekennzeichnet, dass**
wenigstens einer, insbesondere jeder, der Verteilerförderer (17, 19, 21) ausschließlich in Förderrichtung (F) antreibbar ist.

3. Vorrichtung nach Anspruch 1 oder 2,
**dadurch gekennzeichnet, dass**
wenigstens ein, insbesondere genau ein, weiterer Verteilerförderer (21) zwischen dem Eingangsförderer (13) und dem Ausgangsförderer (15) angeordnet ist, welcher unabhängig von den übrigen Verteilerförderern (17, 19) quer zu der Förderrichtung (F) verschiebbar ist.

4. Vorrichtung nach einem der vorstehenden Ansprüche,
**dadurch gekennzeichnet, dass**
der in Förderrichtung (F) gesehen vorderste Verteilerförderer (19, 21) in genau zwei bezüglich der Förderrichtung (F) nebeneinanderliegende und unabhängig voneinander antreibbare Teile (19a, 19b, 21a, 21b) geteilt ist.

5. Vorrichtung nach zumindest einem der vorstehenden Ansprüche,
**dadurch gekennzeichnet, dass**
die Verteilerförderer (17, 19, 21) jeweils mehrere nebeneinander befindliche Förderspuren zum parallelen Fördern von Gruppen von Produkten (11) oder Produktportionen aufweisen, wobei insbesondere die Anzahl der Förderspuren gleich der maximalen Anzahl von Förderspuren des Eingangsförderers (13) und/oder des Ausgangsförderers (15) ist.

6. Vorrichtung nach einem der vorstehenden Ansprüche,
**dadurch gekennzeichnet, dass**
jeder der Verteilerförderer (17, 19, 21) ausgehend von einer Mittelstellung um höchstens eine Förderspur quer zu der Förderrichtung verschiebbar ist.

7. Vorrichtung nach einem der vorstehenden Ansprüche,
**dadurch gekennzeichnet, dass**
die Verteilerförderer (17, 19, 21) jeweils eine auf die Förderrichtung (F) bezogene Länge aufweisen, die gerade zur Aufnahme eines Produktes (11) eines Stroms von nacheinander geförderten Produkten (11) ausreicht, und/oder dass die Verteilerförderer (17, 19, 21) jeweils als Band- oder Riemenförderer ausgebildet sind, und/oder dass der Eingangsförderer (13), der Ausgangsförderer (15) und die Verteilerförderer (17, 19, 21) die gleiche Förderbreite aufweisen.

8. Vorrichtung nach einem der vorstehenden Ansprüche,
**dadurch gekennzeichnet, dass**
der Eingangsförderer (13), die Verteilerförderer (17, 19, 21) und der Ausgangsförderer (15) ohne gegenseitige Überlappung aufeinanderfolgend entlang der Förderrichtung (F) angeordnet sind.

9. Vorrichtung nach einem der vorstehenden Ansprüche,
**dadurch gekennzeichnet, dass**
der Eingangsförderer (13) und/oder der Ausgangsförderer (15) zum zeilenweisen Fördern der Produkte (11) in Förderrichtung (F) ausgebildet sind.

## Claims

1. An apparatus for distributing a stream of products (11), in particular food products, comprising
an ingoing conveyor (13) and an outgoing conveyor (15) which are configured to convey the products (11) along a conveying direction (F) and which are arranged behind one another viewed in the conveying direction (F); and
at least two, in particular at most three, distributor conveyors (17, 19, 21) which are arranged behind one another viewed in the conveying direction (F) between the ingoing conveyor (13) and the outgoing conveyor (15) and which are each configured to convey the products (11) along the conveying direction (F),
wherein the distributor conveyors (17, 19, 21) are displaceable independently of one another transverse to the conveying direction (F); and
wherein one of the distributor conveyors (17, 19, 21) is divided into exactly two parts (17a, 17b, 19a, 19b, 21a, 21b) disposed next to one another with respect to the conveying direction (F), with the parts being drivable independently of one another; wherein
only the distributor conveyor (19, 21) at the very front viewed in the conveying direction (F) is divided into exactly two parts (19a, 19b, 21a, 21b) disposed next to one another with respect to the conveying direction (F) and drivable independently of one another,
**characterized in that**
each of the two parts (19a, 19b, 21a, 21b) of the divided distributor conveyor (19, 21) has a plurality of conveying tracks located next to one another for the parallel conveying of products (11), with the number of conveying tracks amounting to exactly half the maximum number of conveying tracks of the ingoing conveyor (13) and/or of the outgoing conveyor (15); and **in that**
at least one of the distributor conveyors (17, 19, 21) is displaceable by at most one conveying track transverse to the conveying direction starting from a center position.

2. An apparatus in accordance with claim 1,
**characterized in that**
at least one, in particular each, of the distributor conveyors (17, 19, 21) can be driven only in the conveying direction (F).

3. An apparatus in accordance with claim 1 or claim 2,
**characterized in that**
at least one, in particular exactly one, further distributor conveyor (21) is arranged between the ingoing conveyor (13) and the outgoing conveyor (15) and is displaceable independently of the other distributor conveyors (17, 19) transverse to the conveying direction (F).

4. An apparatus in accordance with any one of the preceding claims,
**characterized in that**
the distributor conveyor (19, 21) at the very front viewed in the conveying direction (F) is divided into exactly two parts (19a, 19b, 21a, 21b) disposed next to one another with respect to the conveying direction (F) and drivable independently of one another.

5. An apparatus in accordance with at least one of the preceding claims,
**characterized in that**
the distributor conveyors (17, 19, 21) each have a plurality of conveying tracks located next to one another for the parallel conveying of groups of products (11) or product portions, with in particular the number of conveying tracks being equal to the maximum number of conveying tracks of the ingoing conveyor (13) and/or of the outgoing conveyor (15).

6. An apparatus in accordance with any one of the preceding claims,
**characterized in that**
each of the distributor conveyors (17, 19, 21) is displaceable by at most one conveying track transverse to the conveying direction starting from a center position.

7. An apparatus in accordance with any one of the preceding claims,
**characterized in that**
the distributor conveyors (17, 19, 21) each have a length with respect to the conveying direction (F) which is just sufficient for taking up a product (11) of a stream of products (11) conveyed after one another; and/or **in that**
the distributor conveyors (17, 19, 21) are each configured as band conveyors or belt conveyors; and/or **in that**
the ingoing conveyor (13), the outgoing conveyor (15) and the distributor conveyors (17, 19, 21) have the same conveying width.

8. An apparatus in accordance with any one of the preceding claims,
**characterized in that**
the ingoing conveyor (13), the distributor conveyors (17, 19, 21) and the outgoing conveyor (15) are arranged without mutual overlap following one another along the conveying direction (F).

9. An apparatus in accordance with any one of the preceding claims,
**characterized in that**
the ingoing conveyor (13) and/or the outgoing conveyor (15) is/are configured for the line-wise conveying of the products (11) in the conveying direction (F).

## Revendications

1. Dispositif pour répartir un flux de produits (11), en particulier de produits alimentaires, comprenant
un convoyeur d'entrée (13) et un convoyeur de sortie (15), qui sont réalisés pour convoyer les produits (11) le long d'une direction de convoyage (F) et qui sont agencés l'un derrière l'autre, vus dans la direction de convoyage (F), et
au moins deux, en particulier au maximum trois, convoyeurs répartiteurs (17, 19, 21), qui sont agencés les uns derrière les autres, vus dans la direction de convoyage (F), entre le convoyeur d'entrée (13) et le convoyeur de sortie (15) et qui sont réalisés respectivement pour convoyer les produits (11) le long de la direction de convoyage (F),
dans lequel les convoyeurs répartiteurs (17, 19, 21) sont déplaçables indépendamment les uns des autres perpendiculairement à la direction de convoyage (F), et
dans lequel l'un des convoyeurs répartiteurs (17, 19, 21) est divisé en exactement deux parties (17a, 17b, 19a, 19b, 21a, 21b) agencées l'une à côté de l'autre par référence à la direction de convoyage (F), lesdites parties étant susceptibles d'être entraînées indépendamment l'une de l'autre, dans lequel
exclusivement le convoyeur répartiteur (19, 21) situé le plus en avant, vu dans la direction de convoyage (F), est divisé en exactement deux parties (19a, 19b, 21a, 21b) situées l'une à côté de l'autre par référence à la direction de convoyage (F) et susceptibles d'être entraînées indépendamment l'une de l'autre,
**caractérisé en ce que**
chacune des deux parties (19a, 19b, 21a, 21b) du convoyeur répartiteur divisé (19, 21) comprend plusieurs voies de convoyage situées les unes à côté des autres pour le convoyage parallèle de produits (11), le nombre des voies de convoyage étant exactement la moitié du nombre maximum des voies de convoyage du convoyeur d'entrée (13) et/ou du convoyeur de sortie (15), et **en ce que**
l'un au moins des convoyeurs répartiteurs (17, 19, 21) est déplaçable, en partant d'une position médiane, au maximum d'une voie de convoyage perpendiculairement à la direction de convoyage.

2. Dispositif selon la revendication 1,
**caractérisé en ce qu'**au moins un, et en particulier chaque, convoyeur répartiteur (17, 19, 21) est susceptible d'être entraîné exclusivement dans la direction de convoyage (F).

3. Dispositif selon la revendication 1 ou 2,
**caractérisé en ce qu'**au moins un, et en particulier exactement un, autre convoyeur répartiteur (21) est agencé entre le convoyeur d'entrée (13) et le convoyeur de sortie (15), qui est susceptible d'être déplacé perpendiculairement à la direction de convoyage (F) indépendamment des autres convoyeurs répartiteurs (17, 19).

4. Dispositif selon l'une des revendications précédentes,
**caractérisé en ce que** le convoyeur répartiteur (19, 21) situé le plus en avant, vu dans la direction de convoyage (F), est divisé exactement en deux parties (19a, 19b, 21a, 21b) disposées l'une à côté de l'autre par référence à la direction de convoyage (F) et susceptibles d'être entraînées indépendamment l'une de l'autre.

5. Dispositif selon l'une au moins des revendications précédentes,
**caractérisé en ce que** les convoyeurs répartiteurs (17, 19, 21) comportent chacun plusieurs voies de convoyage situées les unes à côté des autres pour le convoyage parallèle de groupes de produits (11) ou de portions de produits, et le nombre des voies de convoyage est en particulier égal au nombre maximum de voies de convoyage du convoyeur d'entrée (13) et/ou du convoyeur de sortie (15).

6. Dispositif selon l'une des revendications précédentes,
**caractérisé en ce que** chacun des convoyeurs répartiteurs (17, 19, 21) est déplaçable, en partant d'une position médiane, au maximum d'une voie de convoyage perpendiculairement à la direction de convoyage.

7. Dispositif selon l'une des revendications précédentes,
**caractérisé en ce que**
les convoyeurs répartiteurs (17, 19, 21) ont une longueur, par référence à la direction de convoyage (F) qui suffit juste pour recevoir un produit (11) d'un flux de produits (11) convoyés les uns après les autres, et/ou **en ce que**
les convoyeurs répartiteurs (17, 19, 21) sont réalisés respectivement sous forme de convoyeurs à bande ou de convoyeurs à courroie, et/ou le convoyeur d'entrée (13), le convoyeur de sortie (15) et les convoyeurs répartiteurs (17, 19, 21) ont la même largeur de convoyage.

8. Dispositif selon l'une des revendications précédentes,
**caractérisé en ce que** le convoyeur d'entrée (13), les convoyeurs répartiteurs (17, 19, 21) et le convoyeur de sortie (15) sont agencés successivement et sans chevauchement mutuel le long de la direction de convoyage (F).

9. Dispositif selon l'une des revendications précédentes,
**caractérisé en ce que** le convoyeur d'entrée (13) et/ou le convoyeur de sortie (15) sont réalisés pour convoyer les produits (11) ligne par ligne dans la direction de convoyage (F).
